# EUROPEAN PATENT APPLICATION

(11) **EP 4 684 880 A2**
(43) Date of publication of application: **28.01.2026**
(21) Application number: 25216215.1
(22) Date of filing: 30.04.2025
(51) Int. Cl.: B01L 9/00

(54) **DIAGNOSTIC CARTRIDGE AND DIAGNOSTIC CARTRIDGE BASE**

(30) Priority: 07.05.2024 US 202418656994
(62) Divisional of application: 25173636.9
(71) Applicant: Bioup Labs Taiwan Co., Ltd., Zhubei City, Hsinchu 30273 (TW)
(72) Inventor: CHEN, Kun Lung, 30264 ZHUBEI CITY, XINZHU COUNTY (TW); LIAO, Ke Pan, 310019 ZHUDONG TOWNSHIP, HSINCHU COUNTY (TW); TAI, Lin Ai, 305049 XINPU TOWNSHIP, HSINCHU COUNTY (TW)
(74) Representative: 2K Patentanwälte Blasberg Kewitz & Reichel

(57) **Abstract**

A diagnostic cartridge is provided. The diagnostic cartridge (10) includes a case body (102), a biosensor device (104), and a fluid-guide body (108). The case body (102) has a recess. The biosensor device (104) is embedded in the recess of the case body (102). The fluid-guide body (108) is in the case body (102). The fluid-guide body (108) includes a first pumping opening (118) in proximity to a side of the fluid-guide body (108); a second pumping opening (120) in proximity to the side of the fluid-guide body (108); a sample reservoir (124) and a buffer reservoir (112) laterally between the first pumping opening (118) and the second pumping opening (120) from a side view perspective; and a plurality of channels (126). One of the plurality of channels (126) connects the sample reservoir (124) and the buffer reservoir (112) and crossing over the biosensor device (104), and the sample reservoir (124) and the buffer reservoir (112) further connecting with the first pumping opening (118) or the second pumping opening (120) through the plurality of channels (126), respectively.

## Description

### CROSS REFERENCE TO RELATED APPLICATION

The present application is a divisional application of EP Patent Application No. 25173636.9 filed on April 30, 2025, which claims the benefit of prior-filed U.S. Patent Application No. 18/656,994, filed on May 7, 2024, and incorporates its entirety herein.

### FIELD

The present invention relates to a diagnostic cartridge and semiconductor biosensor diagnostic system comprising thereof, particularly, the disclosed diagnostic cartridge applied in the semiconductor biosensor diagnostic system is a portable device and includes a pumping mechanism that the biomedical sample and the buffer liquid can be precisely guided to in contact with an electrical based biosensor chip inside the diagnostic cartridge.

### BACKGROUND

The use of biosensing instruments using disposable sample pieces has been increasing each year, and it is expected to enable simple and quick assay and analysis of a particular component in a biological body fluid such as blood, plasma, urine, saliva, or the whole set of proteins created in a cell at a certain point in time, i.e., a proteome. Moreover, individually tailored medical treatments, in which individuals are treated and administered medicines according to their SNP (acronym for Single Nucleotide Polymorphism) information, are expected to be put into practice in the future by genetic diagnosis using disposable DNA chips. This personalized approach will be supported by protein and DNA diagnostics. Disposable semiconductor biosensor devices and its electronic analyzer with affordable cost will play a crucial role, enabling rapid detection and diagnosis of challenging diseases such as Alzheimer's disease and cancer through liquid biopsy techniques.

### BRIEF DESCRIPTION OF THE DRAWINGS

Aspects of the present invention are best understood from the following detailed description when read with the accompanying figures. It is noted that, in accordance with the standard practice in the industry, various structures are not drawn to scale. In fact, the dimensions of the various structures may be arbitrarily increased or reduced for clarity of discussion.
FIG. **1A** illustrates a cross-sectional view of a diagnostic cartridge according to some embodiments of the present invention.
FIG. **1B** illustrates a cross-sectional view of a diagnostic cartridge according to some embodiments of the present invention.
FIG. **2** illustrates a cross-sectional view of an integrated biosensor structure according to some embodiments of the present invention.
FIG. **3** illustrates a cross-sectional view of an integrated biosensor structure according to some embodiments of the present invention.
FIG. **4** illustrates a cross-sectional view of an integrated biosensor structure according to some embodiments of the present invention.
FIG. **5A** illustrates a top view of a PCB according to some embodiments of the present invention.
FIG. **5B** illustrates a bottom view of a PCB according to some embodiments of the present invention.
FIG. **6A** illustrates a cross-sectional view of a diagnostic cartridge according to some embodiments of the present invention.
FIG. **6B** illustrates a top view of the positions of the reservoirs and the pumping openings in the diagnostic cartridge according to some embodiments of the present invention.
FIG. **6C** illustrates a top view of the positions of the reservoirs and the pumping openings in the diagnostic cartridge according to some embodiments of the present invention.
FIG. **7A** illustrates a cross-sectional view of a diagnostic cartridge according to some embodiments of the present invention.
FIG. **7B** illustrates a top view of the positions of the reservoirs and the pumping openings in the diagnostic cartridge according to some embodiments of the present invention.
FIG. **7C** illustrates a top view of the positions of the reservoirs and the pumping openings in the diagnostic cartridge according to some embodiments of the present invention.
FIG. **8** illustrates a cross-sectional view of a diagnostic cartridge according to some embodiments of the present invention.
FIG. **9** illustrates a cross-sectional view of a diagnostic cartridge according to some embodiments of the present invention.
FIG. **10** illustrates a cross-sectional view (schematic diagram) of a diagnostic cartridge and a diagnostic cartridge base according to some embodiments of the present invention.
FIG. **11** illustrates a cross-sectional view (schematic diagram) of a diagnostic cartridge base according to some embodiments of the present invention.
FIG. **12A** illustrates a cross-sectional view of a diagnostic cartridge according to some embodiments of the present invention.
FIG. **12B** illustrates a cross-sectional view of a diagnostic cartridge according to some embodiments of the present invention.
FIG. **13** illustrates a three-dimensional diagram of a semiconductor biosensor diagnostic system according to some embodiments of the present invention.
FIGs. **14A-14D** illustrate cross-sectional views of an operating process of a semiconductor biosensor diagnostic system according to some embodiments of the present invention.

### DETAILED DESCRIPTION

The following disclosure provides many different embodiments, or examples, for implementing different features of the provided subject matter. Specific examples of elements and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above," "upper", "on" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

As used herein, the terms such as "first", "second" and "third" describe various elements, components, regions, layers and/or sections, these elements, components, regions, layers and/or sections should not be limited by these terms. These terms may be only used to distinguish one element, component, region, layer or section from another. The terms such as "first", "second", and "third" when used herein do not imply a sequence or order unless clearly indicated by the context.

In the course diagnostic test, biomedical samples are usually placed in the biomedical sensor and the results of the diagnosis are presented visually, for instance, the color change of biomedical samples, the light reflected by the biomedical samples, the visibility of the lines show in the test kits (e.g., pregnancy test kit, COVID-19 test kit, influenza test kit), the fluorescent reaction of the biomedical samples, the visible marks show in the test strips, etc. In some comparative embodiments, once the color of the biomedical sample is changed during the diagnosis, the result can be observed with the naked eye, or some CMOS image sensors can be used to monitor such visible change for further analysis. These optical-based diagnosis approaches or the usage of optical-based sensors are widely used for fluidic biomedical samples, such as DNA-containing fluids, blood, interstitial fluid in subcutaneous tissue, muscle or brain tissue, urine, or other body fluids.

However, from the perspective of component volume, optical-based diagnostic approaches or sensors are generally more challenging to miniaturize compared to electrical-based ones. Additionally, electrical-based approaches and sensors are more suitable for performing the majority of signal processing tasks within the chip.

Currently, in the circumstances that the biomedical samples are tested under electrical-based diagnosis approaches, the sensing devices are fairly bulky and difficult to portability, and therefore some embodiments of the present invention provide a semiconductor biosensor diagnostic system that includes a portable diagnostic cartridge that can provide high-quality diagnosis result. In these embodiments, the semiconductor biosensor chip allows direct sensing of the sample material and directly converts the biomedical signal to an electrical signal.

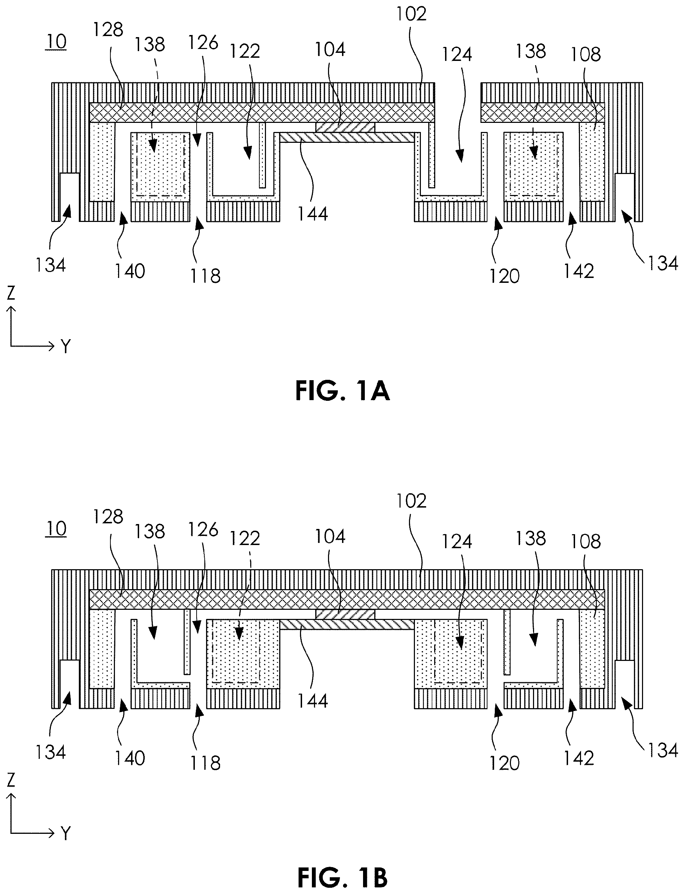

FIGs. **1A** and **1B** illustrate a diagnostic cartridge **10** according to some embodiments of the present invention. FIGs. **1A** and **1B** are obtained from different cross-sectional lines of the diagnostic cartridge **10,** and so that different reservoirs in the diagnostic cartridge **10** can be illustrated in these figures. In some embodiments, from the cross-sectional view perspective shown in FIG. **1****,** the diagnostic cartridge **10** includes a case body **102,** a biosensor device **104,** and a fluid-guide body **108.** Roughly, the diagnostic cartridge **10** is a portable case that can be used to accommodate biomedical samples and have a function to convert the biomedical signal of the biomedical samples to the electrical signal. Therefore, the arrangement of the chip inside the diagnostic cartridge **10** and planning the flow of the sample are important matters in designing the diagnostic cartridge **10.**

In some embodiments, the case body **102** is a hard case used to protect the structures inside the diagnostic cartridge **10.** In order to match with the device to read the information from the diagnostic cartridge **10,** the case body **102** can include a plurality of openings for communications, which will be described later.

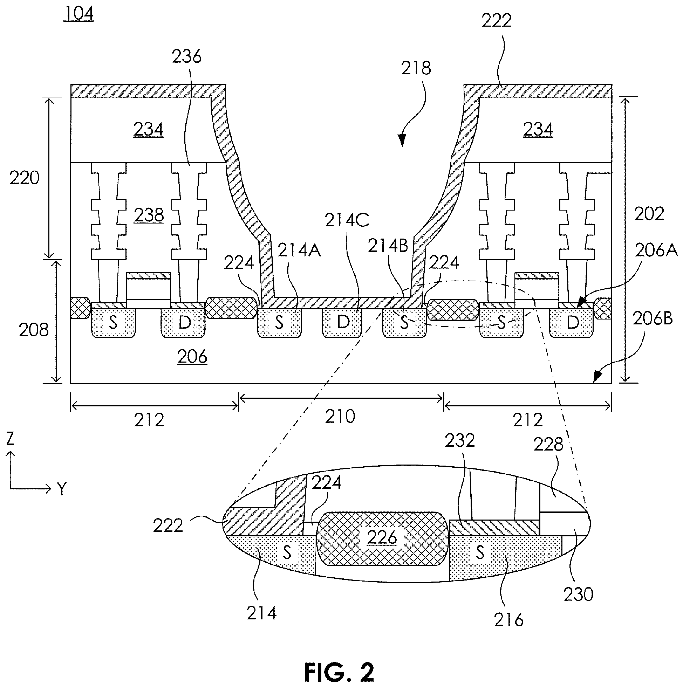

In some embodiments, the biosensor device **104** is disposed in proximity to an inner surface **102A** of the case body **102.** In some embodiments, the biosensor device **104** is a biosensor chip that can be utilized to allow direct detection of biological analytes and to convert the bio-signal directly to an electrical signal. In some embodiments, the detection and the signal conversion can be performed by a CMOS IC biosensor, a silicon nanowire biosensor, an extended-gate FET biosensor, an ISFET, or the like. In the scenario that a CMOS IC biosensor is applied, the biosensor device **104** may include an integrated biosensor structure and that the sensing structure is directly formed on a CMOS structure, which can make the biosensor perform the features of good sensitivity, and the manufacturing cost thereof is acceptable as well. For instance, referring to the embodiment illustrated in FIG. **2****,** the biosensor device **104** includes a CMOS structure **202** and a sensing oxide layer **222** formed over the CMOS structure **202.** The CMOS structure **202** includes a substrate **206,** a front-end-of-line (FEOL) structure **208,** and a back-end-of-line (BEOL) structure **220** formed in proximity to a first surface **206A** of the substrate **206.** In some embodiments, the substrate **206** is a semiconductor substrate made of semiconductor materials such as silicon, germanium, diamond, or the like. Alternatively, in other embodiments, compound materials such as silicon germanium, silicon carbide, gallium arsenic, indium arsenide, indium phosphide, silicon germanium carbide, gallium arsenic phosphide, gallium indium phosphide, combinations thereof, and the like, may also be used to form the substrate **206.**

In some embodiments, the substrate **206** includes different regions configured to perform distinct functions. As shown in FIG. **2****,** in such embodiment, the substrate **206** includes a sensing region **210** and a logic region **212** surrounding the sensing region **210.** In the present invention, the meanings of these regions can be vertically extended, for example, the structures that formed over the sensing region **210** of the substrate **206** can be identified as "within the sensing region **210",** and so does the logic region **212.** The sensing region **210** is configured to form a sample-holding structure for the sensing purpose, whereas the logic region **212** is configured to form an interconnect structure for the electrical purpose. In some embodiments of the present invention, the sample-holding structure within the sensing region **210** is substantially leveled with the interconnect structure within the logic region **212.** In other words, the path for signal transmission in some embodiments of the present invention can be shortened by excluding the interconnect structure from the path between the sample-holding structure and a sensing structure (e.g., a doped region within the sensing region **210).** More details are disclosed as follows.

In some embodiments, the FEOL structure **208** can be formed in/on the substrate **206.** In some embodiments, the FEOL structure **208** has a plurality of doped regions at the first surface **206A** of the substrate **206.** In some embodiments, a portion of the doped regions (e.g., the first doped regions **214)** are located within the sensing region **210,** while another portion of the doped regions (e.g., the second doped regions **216)** are located within the logic region **212.** In some embodiments, the doped regions located within the sensing region **210** are configured to perform as terminals in receiving or sensing the change of potential (ΔV) induced by a sensing layer thereon. For example, in the case of the biosensor device **104** in the present invention is used for DNA sequencing, particularly, for non-optical DNA sequencing, a DNA template can be accommodated in the sample-holding structure within the sensing region **210.** Then, protons (H⁺) are released when nucleotides (dNTP) are incorporated into the growing DNA strands, changing the pH of the medium in the sample-holding structure (ΔpH). This progress can induce a change in the surface potential of the sensing layer and a change in the potential (ΔV) of the source terminal in the substrate **206.**

Other than the portion of the doped regions located within the sensing region **210,** the doped regions within the logic region **212** are configured to perform the functions of the terminals of field-effect transistors (FET), which means these doped regions can be a portion of the transistors within the logic region **212,** and generally, these transistors are connected to the BEOL structure **220** thereover. In some embodiments, the signals acquired from the sensing region **210** can be transmitted to other semiconductor devices (e.g., an amplifier circuit) by the structures in the logic region **212.**

As shown in FIG. **2****,** in some embodiments, the BEOL structure **220** over the FEOL structure **208** includes a first trench **218** exposing the sensing region **210** of the substrate **206.** The first trench **218** can be called a well or a nanowell, depending on the size thereof. In some embodiments, as the example shown in FIG. **2****,** the doped regions such as the source regions **214A, 214B** and the drain region **214C** are exposed at a bottom of the first trench **218** (these source/drain regions are exposed in the CMOS structure **202,** but the CMOS structure **202** is further be covered by a sensing oxide layer **222,** which will be discussed later). In some embodiments, the bottom of the first trench **218** is substantially identical to or coplanar with the first surface **206A** of the substrate **206.**

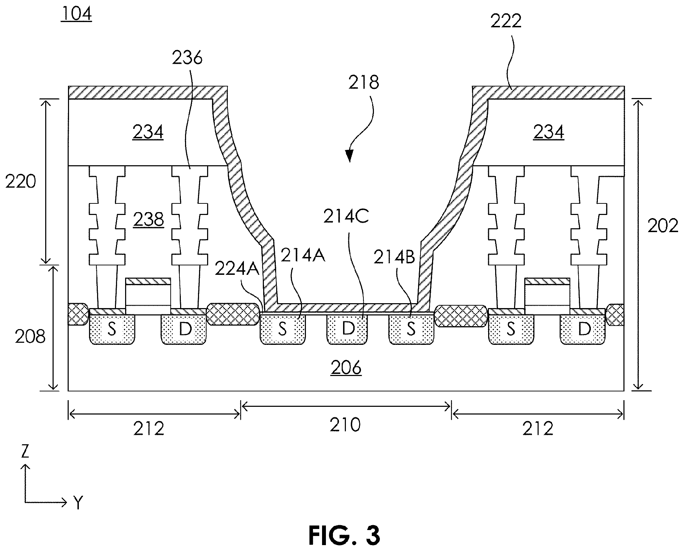

In other embodiments, as shown in FIG. 3, each of the doped regions within the sensing region **210** such as the source regions **214A, 214B,** and the drain region **214C** are not entirely exposed at the bottom of the first trench **218** due to the coverage of a thin first gate oxide **224A.** The first gate oxide is a gate dielectric layer of a gate structure, which is formed under a gate electrode of the gate structure. The gate dielectric layer may be made of silicon oxide, silicon nitride, or a high dielectric constant material (high-k material). In some embodiments, the gate dielectric layer is formed by a chemical vapor deposition (CVD) operation. In some embodiments of the present invention, the gate dielectric layer is made of silicon oxide, thus called gate oxide hereinafter.

The gate electrode that formed over the gate oxide may be made of polysilicon (POLY) or any other suitable conductive material. The suitable conductive material includes but is not limited to metal (e.g., tantalum, titanium, molybdenum, tungsten, platinum, aluminum, hafnium, ruthenium), metal silicide (e.g., titanium silicide, cobalt silicide, nickel silicide, tantalum silicide), or metal nitride (e.g., titanium nitride, tantalum nitride). In some embodiments, the gate electrode is formed by chemical vapor deposition (CVD), low-pressure chemical vapor deposition, physical vapor deposition (PVD), atomic layer deposition, or spin-on. In some embodiments, the gate structure is formed by forming the gate electrode on the gate oxide, and then patterning the gate electrode by etching to form the gate structure. In some embodiments of the present invention, the first gate oxide **224** is thinned down after a removing operation to a polysilicon gate electrode formed thereon, and such thin first gate oxide **224A** can be used as an etch stop layer in removing the poly gate electrode to protect the intactness of the doped regions there below within the sensing region **210.** In some embodiments, the first gate oxide **224** can be removed in the operation of forming the first trench **218** prior to forming a sensing oxide layer **222** thereon.

In some embodiments, a portion of the first gate oxide **224** can be removed in the operation of forming the first trench **218** prior to forming the sensing oxide layer **222** thereon, while another portion of the first gate oxide **224,** or called a first gate oxide residue, is adjacent to an edge of the first trench **218,** particularly, as shown in the enlarged portion in FIG. **2****.** In some embodiments, a side of the first gate oxide (residue) **224** is exposed at a corner portion of the first trench **218** to be in contact with the sensing oxide layer **222.** That is, in order to well protect the doped regions within the sensing region **210** during the manufacturing process, the boundary of the first trench **218** can land over the doped region within the sensing region **210,** and therefore the first gate oxide **224** is partially removed, and the first gate oxide residue is left near the edge of the sensing region **210.**

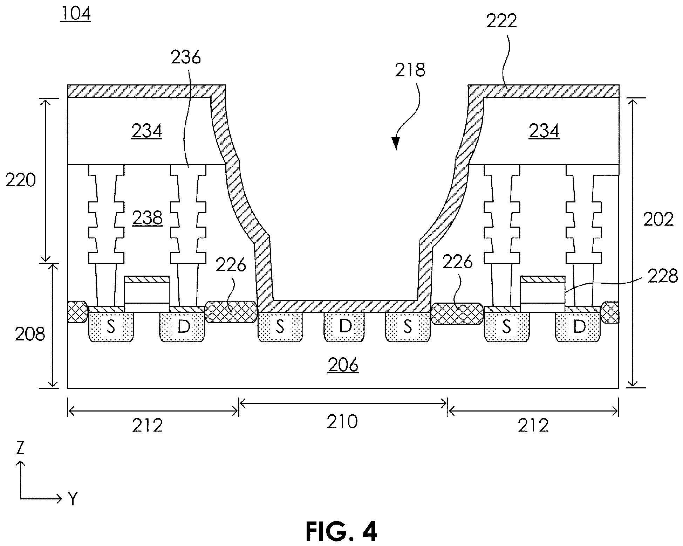

In other embodiments, as shown in FIG. **4****,** the edge of the first trench **218** is aligned with an edge of a field oxide **226,** and therefore the first gate oxide **224** can be removed entirely in the operation of forming the first trench **218.**

As shown in FIGs. **2-4****,** the structure features within the logic region **212** can be the same. In some embodiments, a plurality of poly gate structures **228** are formed over the doped regions within the logic region **212.** In some embodiments, a second gate oxide **230** can be formed between the first surface **206A** of the substrate **206** and each of the plurality of poly gate structures **228.** In some embodiments, each of the plurality of poly gate structures **228** and a least a portion of each of the doped regions within the logic region **212** are covered by a silicide layer **232.** In some embodiments, there are at least two second gate oxides **230** over the logic region **212** of the substrate **206,** the two second gate oxides **230** are located at two sides of the first trench **218,** respectively.

In some embodiments, the sensing oxide layer **222** is formed over the BEOL structure **220** and in contact with the first surface **206A** within the sensing region **210** of the substrate **206.** That is, the sensing oxide layer **222** can be formed over the BEOL structure **220** within the logic region **212,** while the first trench **218** is formed within the sensing region **210,** the structure of the sensing oxide layer **222** is conformal with the profile of first trench **218** to form a sensing trench within the sensing region **210.** In some embodiments, the sensing oxide layer **222** includes hafnium oxide (HfOₓ). In some embodiments, the thickness of the sensing oxide layer **222** is about 3 nm. In some embodiments, since the inner sidewall of the first trench **218** does not include a continuous planar profile due to an altar of the etching operation in forming the first trench **218,** the profile of the sensing oxide layer **222** in the first trench **218** includes at least a change of slope along the inner sidewall of the first trench **218.**

In some embodiments, the silicide layer **232** is not formed within the sensing region **210,** thus each of the doped regions free from in contact with the sensing oxide layer **222** is covered by a silicide layer **232.** That is, silicide is a compound of silicon with metal, and therefore the silicide layer **232** can ensure low contact and series resistance to the source and drain region of the transistor within the logic region **212,** whereas the doped regions within the sensing region **210** (i.e., the first doped regions **214)** do not need to have conductive contacts and metallization structures thereon, hence there is no silicide layer **232** formed within the sensing region **210.**

In some embodiments, within the logic region **212,** a metallization structure **236** is formed over the plurality of poly gate structures **228** and the plurality of second doped regions **216.** The metal layers and conductive contacts and vias in the metallization structure **236** can be surrounded by an interlayer dielectric (ILD) **238.** In some embodiments, since the silicide layer **232** is formed to cover the plurality of poly gate structures **228** and the second doped regions **216** within the logic region **212,** the conductive contacts of the metallization structure **236** can be landed on the top surface of the silicide layer **232.** In some embodiments, the metallization structure **236** includes four metal layers connected by a plurality of conductive vias therebetween, however, the number of the metal layers is not a limitation of the present embodiments.

In some embodiments, the logic region **212** includes a passivation layer **234** formed over the metallization structure **236.** The passivation layer **234** may be made of undoped silicate glass (USG), silicon oxynitride, phosphosilicate glass (PSG), borophosphosilicate glass (BPSG), fluorinated silicate glass (FSG), organosilicate glasses (OSG), SiOₓC_{y}, Spin-On-Glass, or the like. In some embodiments, the passivation layer **234** is formed by high density plasma (HDP), chemical vapor deposition (CVD), plasma-enhanced CVD, sputter, spin-on, physical vapor deposition (PVD), or other applicable methods.

In some embodiments, the sensing oxide layer **222** as previously mentioned can be formed over the passivation layer **234.** In some embodiments, the sensing oxide layer **222** is in contact with the passivation layer **234.** In some embodiments, the sensing oxide layer **222** in the sensing region **210** extends to the logic region **212** along a side of the metallization structure **236** and a side of the passivation layer **234.** In some embodiments, the slope of the side of the first trench **218** (or the slope of the sensing oxide layer **222)** is changed due to a change in the etching operations. For example, in forming the first trench **218** that penetrates the passivation layer **234** and the metallization structure **236,** an isotropic etching operation can be applied at the very beginning in etching the passivation layer **234** and a portion of the metallization structure **236,** and then an anisotropic etching operation can be applied to etch the remained metallization structure **236** to expose the first surface **206A** of the substrate **206** within the sensing region **210.**

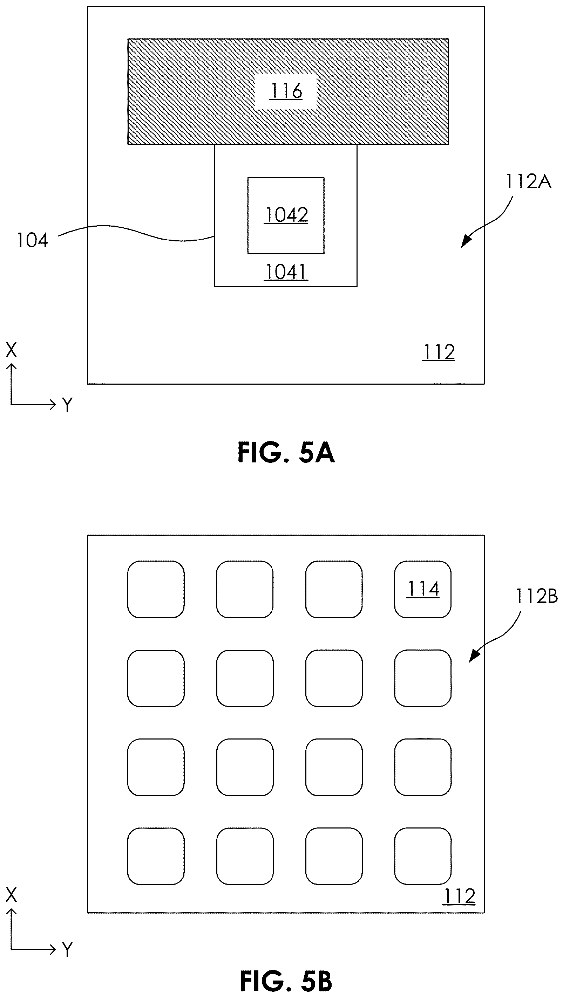

In order to integrate the biosensor device **104** into the diagnostic cartridge **10,** in some embodiments, the biosensor device **104** is disposed on a substrate such as a semiconductor substrate, an ITO glass substrate, a metal substrate, a printed circuit board (PCB), a flexible print circuit (FPC) substate, an interposer, a wiring substrate, or the like. The PCB **112,** for example, can be disposed on the inner surface **102A** of the case body **102.** The PCB **112** has an upper surface **112A** and a lower surface **112B** opposite to the upper surface **112A.** Referring to FIGs. **5A** and **5B****,** which illustrate different sides of the PCB **112,** in some embodiments, the PCB **112** includes a plurality of metal pads **114** (or called a metal pad structure) at the lower surface **112B,** the metal pads **114** are electrically connected to the biosensor device **104** on the upper surface **112A** through a plurality of wiring portions passing through the PCB **112.** Other than the ordinary PCB, in other embodiments, the biosensor device **104** can be mounted over a substrate which is optical transmissible for reading optical signal if the biosensor device **104** is designed to provide them.

In some embodiments, the size of the biosensor device **104** is as small as a few millimeters square, for instance, both the wide and length of the biosensor device **104** can be about 4.5 mm, while a sensing region **1042** of the biosensor device **104** is only about 3.2*3.2 mm². In some embodiments, the sensing region **1042** is surrounded by a containment structure **1041** to assist in concentrating the sample in the sensing region **1042;** in such embodiments, the containment structure **1041** can be a portion of the fluid-guide body **108,** and the containment structure **1041** can include several holes for the pass of liquid (i.e., the channels, which will be described later).

In some embodiment, the wiring portion at the upper surface **112A** of the PCB **112** is covered by an epoxy material **116** for preventing oxidation. In some embodiments, the metal pads **114** at the lower surface **112B** of the PCB **112** are arranged in an array, while such array is arranged for corresponding to a probe structure to read the electrical signal from the biosensor device **104.** The probe structure will be further described later.

In some embodiments, the detection and the signal conversion can be performed by a biosensor die that free of being packaged. For instance, the biosensor die may electrically connect to a package substrate through a plurality of conductive pads thereof and a plurality of metal wires. The material package substrate may be a semiconductor substrate, an ITO glass substrate, a PCB, a flexible printed circuit (FPC) board, etc.

In some embodiments, the biosensor device **104** can take the form of a biology slide, incorporating a bioarray structure. This bioarray structure, which may be referred to as a bioarray chip or microarray, is a miniaturized biological experimental platform typically composed of a microarray. In some embodiments, it consists of an array of biological molecules such as DNA, RNA, proteins, or cells, immobilized in a highly ordered fashion on the biology slide.

Optionally, in some embodiments, an elastic membrane or film can be disposed at a side of the case body **102.** In some embodiments, the elastic membrane is made of polydimethylsiloxane (PDMS). The elastic membrane can be used for sealing the opening of in the fluid-guide body **108,** and while the diagnostic cartridge **10** is in the course of sample analysis, the elastic membrane can be punctured to pump the fluid such as air or liquid through the openings.

The openings and the reservoirs are provided by the fluid-guide body **108,** configured to guide a sample and a buffer liquid to the biosensor device **104.** In some embodiments, the fluid-guide body **108** is disposed over the elastic membrane. In some embodiments, the material of the fluid-guide body **108** includes plastic. In some embodiments, the material of the fluid-guide body **108** includes polymer. In some embodiments, the fluid-guide body **108** can be made by CNC, casting, molding, 3D printing, or the like. In some embodiments, the openings and the reservoirs provided by the fluid-guide body **108** includes, for instance, a first pumping opening **118** and a second pumping opening **120** are configured to drive the fluid flow in the fluid-guide body **108** due to fluid pressure difference, and a buffer reservoir **122** and a sample reservoir **124** are configured to accommodate buffer liquids and biomedical samples. In some embodiments, referring to the cross-sectional view perspective shown in FIG. **1A****,** the first pumping opening **118** is in proximity to a first side **1081** of the fluid-guide body **108,** the second pumping opening **120** is in proximity to a second side **1082** of the fluid-guide body **108** opposite to the first side **1081.** In addition, the buffer reservoir **122** and the sample reservoir **124** are laterally between the first pumping opening **118** and the second pumping opening **120.** The fluid-guide body **108** further includes a plurality of channels **126** configured to connect the first pumping opening **118,** the second pumping opening **120,** the buffer reservoir **122,** and the sample reservoir **124;** and therefore, the liquid in the buffer reservoir **122** and the sample reservoir **124** can be drove along the channels **126** by pumping the air from the first pumping opening **118** and the second pumping opening **120.** In some embodiments, each of the buffer reservoir **122** and the sample reservoir **124** is connected to at least two of the plurality of channels **126** so that the fluid may passing through the buffer reservoir **122** and the sample reservoir **124.**

In some embodiments, although the plurality of channels **126** in the diagnostic cartridge **10** are substantially connected among the reservoirs, these channels **126** can be defined to include a first loop comprising the first pumping opening **118** and the buffer reservoir **122,** and a second loop comprising the second pumping opening **120** and the sample reservoir **124,** wherein the first loop and the second loop sharing a common channel passing through the biosensor device **104.** In some embodiments, the feature of the present invention is to ensure that these loops, which is primary for the passing of the biomedical sample **40** and the buffer liquid **42,** respectively, can be overlapped at the position of the biosensor device **104** to ensure the biosensor device **104** may in contact with the biomedical sample **40** and the buffer liquid **42** alternatively.

Referring to FIG. **1B****,** in some embodiments, the fluid-guide body **108** further includes a plurality of waste reservoirs **138** adjacent to the sample reservoir **124** and the buffer reservoir **122,** respectively. The waste reservoirs **138** are configured to accommodate the used sample liquid or the used buffer liquid from the sample reservoir **124** and the buffer reservoir **122,** respectively. In order to receive the used sample liquid or the used buffer liquid, the waste reservoirs **138** are connected to the channels connecting with the sample reservoir **124** and the buffer reservoir **122.**

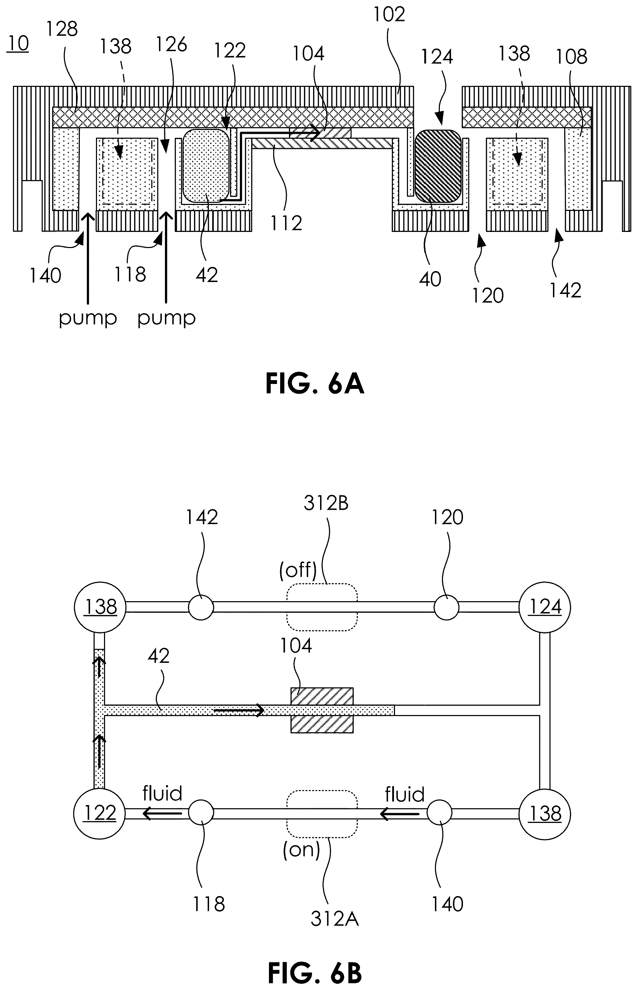

That is, referring to FIGs. **6A** and **6B****,** in some embodiments, in the scenario that the fluid is pumped into the channels **126** from the first pumping opening **118** and/or the third pumping opening **140** through a micro pump **312A** connecting to the first pumping opening **118** and the third pumping opening **140,** the liquid in the buffer reservoir **122** (e.g., the buffer liquid **42)** would be moved toward the position of the biosensor device **104** along the channel **126** between the buffer reservoir **122** and the position of the biosensor device **104** (see the arrows along the channel **126** in FIG. **6B****).** Since the channel **126** has passed through the biosensor device **104,** the buffer liquid **42** can thus in contact with the biosensor device **104** (e.g., in contact with the sensing oxide layer **222** shown in FIGs. **2-4****)** to clean or to pretreating the biosensor device **104** prior to the sample sensing operation. In some embodiments, the buffer liquid **42** includes phosphate buffered saline (PBS). Other than the buffer liquid **42** passed through the biosensor device **104,** in some embodiments, some of the buffer liquid **42** would be moved toward one of the waste reservoirs **138** directly based on the direct connection between such waste reservoir **138** and the buffer reservoir **122** through the channel **126.**

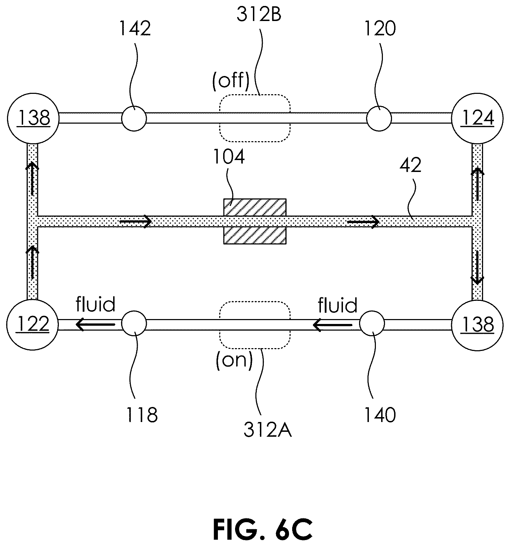

After the biosensor device **104** is washed accordingly, in some embodiments, referring to FIG. **6C****,** the buffer liquid **42** utilized to clean or pretreating the biosensor device **104** can be further moved toward at least one of the waste reservoirs **138** by continuing to pump fluid into the channels **126** from either the first pumping opening **118** or the third pumping opening **140,** since more buffer liquid **42** would be pushed out from the buffer reservoir **122** by the fluid. In other embodiments, the movement of the buffer liquid **42** in the channels **126** relies on the suction of fluid. That is, either the first pumping opening **118** or the third pumping opening **140** can be used to evacuate the fluid from the channels **126** using the micro pump **312A.** In other words, the movement of the buffer liquid **42** in the channels **126** can be driven by the movement of the fluid pumped by the micro pump **312A,** while the selection of the mode of pumping fluid into the channels or out of the channels depends on the arrangement of the reservoirs in the diagnostic cartridge.

In some embodiments, a reference electrical signal (e.g., a reference voltage, a reference current, etc.) can be obtained when the biosensor device **104** is washing by the buffer liquid **42.** The reference electrical signal can be seen as a base value that may be used to compare with the electrical signal that obtained after the biosensor device **104** is interacted with the biomedical sample **40.**

In some embodiments, some of the buffer liquid **42** may be moved toward the sample reservoir **124** after passing through the biosensor device **104** based on the connection between such sample reservoir **124** and the position of the biosensor device **104** through the channel **126.** Generally, the buffer liquid **42** may be controlled as waived from substantially entering the sample reservoir **124** by the length of the channel **126** between the sample reservoir **124** and the position of the biosensor device **104.** For example, the buffer liquid **42** would preferentially enter the waste reservoir **138** nearby instead of the sample reservoir **124.**

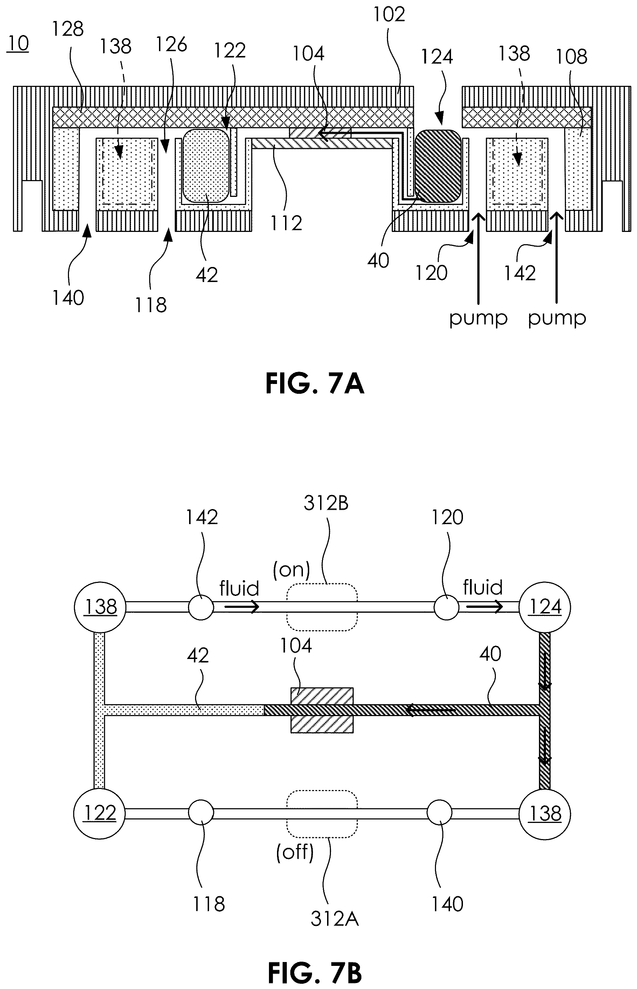

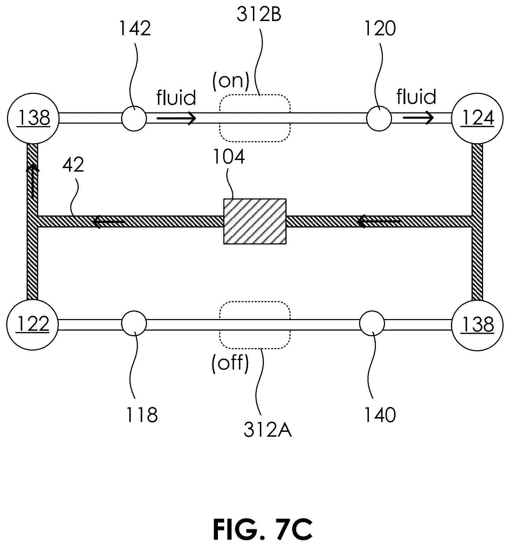

Referring to FIGs. **7A** and **7B****,** in some embodiments, after the biosensor device **104** is washed and ready to be used to sensing the sample, the fluid can be pumped into the channels **126** from the second pumping opening **120** and/or the fourth pumping opening **142** through another micro pump **312B** connecting to the second pumping opening **120** and the fourth pumping opening **142.** The liquid in the sample reservoir **124** (e.g., the biomedical sample **40)** would be moved toward the position of the biosensor device **104** along the channel **126** between the sample reservoir **124** and the position of the biosensor device **104** (see the arrows along the channel **126** in FIG. **7B****).** Again, since the channel **126** has passed through the biosensor device **104,** the biomedical sample **40** can thus in contact with the biosensor device **104** (e.g., in contact with the sensing oxide layer **222** shown in FIGs. **2-4****),** and a sensing information can be obtained from the biosensor device **104.** In some embodiments, the sensing information can be a sample electrical signal (e.g., a sample voltage, a sample current, etc.) that use to compare with the reference electrical signal to obtain the change of the voltage, current, etc. In some embodiments, the sample electrical signal can be obtained from the charges generated during the bonding of the sample molecules to the biosensor device **104** in the pretreatment operation. In some embodiments, since the channels **126** are filled or occupied by the buffer liquid **42** in the previous process for obtaining the reference electrical signal, the biomedical sample **40** from the sample reservoir **124** may displace the buffer liquid **42** when the biomedical sample **40** is moving toward the position of the biosensor device **104.** Accordingly, in some embodiments, an interface of the buffer liquid **42** and the biomedical sample **40** may pass through the position of the biosensor device **104** during the displacement process. Next, referring to FIG. **7C****,** after the sensing information is obtained, the biomedical sample **40** can be further moved toward at least one of the waste reservoirs **138** by continuing to pump fluid into the channels **126** from either the second pumping opening **120** or the fourth pumping opening **142.**

As the examples shown in FIGs. **6A** to **7C****,** the operation of the diagnostic cartridge can be substantially divided into two fluid loops: one for the buffer liquid **42** and the other for the biomedical sample **40.** In some embodiments, these two loops are structurally independent from each other, except for sharing a primary, common channel that passes through the biosensor device **104.**

In some embodiments, each of the plurality of channels **126** along the path between the sample reservoir **124** and the buffer reservoir **122** comprises a plurality of U-turn structures. These U-turn structures are configured to control the flow speed of either the biomedical sample **40** or the buffer liquid **42.** In other embodiments, if the micro pump drives the liquid flow at a slow speed, the design of channels **126** with a large number of U-turn structures can be omitted.

In other embodiments, the control of the flow speed of either the biomedical sample **40** or the buffer liquid **42** can also be performed by the design and the arrangement of the plurality of channels **126** with varied sizes, other than the aspect of the shape (e.g., the U-turn structures) of the plurality of channels **126.**

By selecting the openings of the fluid-guide body to be pumped, the flow of the buffer liquid **42** and the biomedical sample **40** can be well-controlled. In some examples, the first pumping opening **118** can be pumped first to push the buffer liquid **42** along the channel **126** using the fluid, thus the sensing oxide layer **222** of the biosensor device **104,** for example, can be cleaned or pretreated by the buffer liquid **42,** and an initial electrical data (e.g., the reference electrical signal) can be measured; next, the biomedical sample **40** can be injected into the sample reservoir **124** (or can be injected into the sample reservoir **124** before the aforementioned cleaning/pretreating operation); and then the second pumping opening **120** can be pumped to guide the biomedical sample **40** to the first trench **218** of the biosensor device **104** along the channel **126** using the fluid to make the biomedical sample **40** in contact with the biosensor device **104** (e.g., in contact with the sensing oxide layer **222).** After the biomedical sample **40** interacts with the biosensor device **104,** a final electrical data (e.g., the sample electrical signal) can be measured and compared with the initial electrical data to acquire a difference value that refers to the precise result of the reaction between the biomedical sample and the biosensor device **104.** In some embodiments, the result is based on the change of potential value and can be transformed into the current change of the transistors. In other embodiments, the change of current can be obtained directly. On the other hand, since the biosensor device **104** includes transistor structures (transistor-based device), compared with some comparative embodiments that use nanowires (resistor-based device) as sensing structure, the electrical signal in some embodiment of the present invention can be amplified by the analog circuits in the biosensor device **104** to obtain a clear electrical signal after gain without being covered by noise, while the resistance of the nanowires in the comparative embodiments is hard to be precisely designed, and the weak current (e.g. several nA) passing through the nanowires would have a poor signal-to-noise ratio (SNR). Accordingly, in the scenario that the dosage of the biomedical sample **40** is low, the biosensor device **104** in the present invention is still applicable to detect the target ingredient. In some embodiments, before reading the electrical signal from the biosensor device **104,** the fluid can be pumped to push the buffer liquid **42** from the buffer reservoir **122** into the channels **126** again to push the buffer liquid **42** toward the position of the biosensor device **104.** This process may wash away unbonded residues on the biosensor device **104.** Then, the electrical signal can be read and obtained in an accurate manner.

Generally, it is possible that a portion of the buffer liquid **42** can flow into the channels **126,** particularly those in proximity to the sample reservoir **124** when pumping through the first pumping opening **118.** However, the amount of this buffer liquid **42** is limited and would not enter the sample reservoir **124** under the design of the channels **126** and the control of pumping, and therefore the effect of such portion can be neglected. Likewise, a portion of the biomedical sample **40** can flow into the channels **126,** particularly those in proximity to the buffer reservoir **122** when pumping through the second pumping opening **120,** the movement of this biomedical sample **40** is also negligible.

In some embodiments, the diameter of the channel **126** is no greater than about 100 µm. In some embodiments, the diameter of the channel **126** is no greater than about 50 µm. In some embodiments, the diameter of the channel **126** is no greater than about 20 µm. In some embodiments, the diameter the channel **126** is no greater than a threshold that the liquid (e.g., the biomedical sample **40** or the buffer liquid **42)** can perform self-flowing in the channel **126.** In other words, since the diameter of the channel **126** is small in some embodiments of the present invention, the liquid in the channel **126** cannot perform self-flowing, hence the liquid can only be driven by the pumping operations.

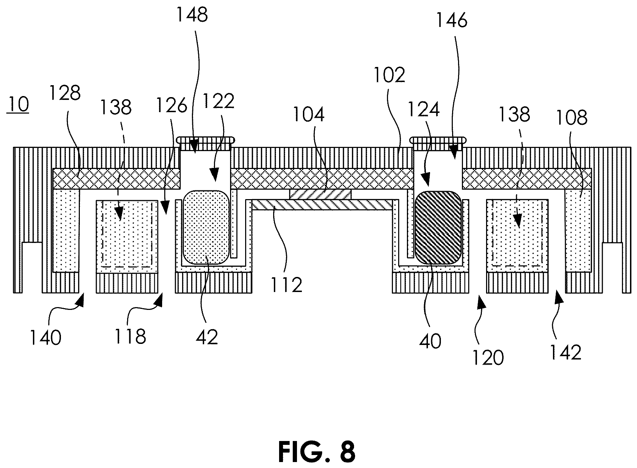

As previously mentioned, the biomedical sample **40** can be injected into the sample reservoir **124** before the cleaning/pretreating operation, and the case body **102** may have a first opening **146** with a first cover set over the sample reservoir **124** for injecting or loading the biomedical sample **40.** Likewise, referring to FIG. **8****,** in some embodiments, the case body **102** may include a second opening **148** with a second cover set over the buffer reservoir **122** configured to inject or load the buffer liquid **42.** In those embodiments, the user may load the buffer liquid themselves instead of having it loaded when manufacturing the diagnostic cartridge by the producer.

In some embodiments, the biomedical sample **40** and/or the buffer liquid **42** can be collected in small bottles or similar container units before being loaded into the sample reservoir **124** and the buffer reservoir **122,** respectively. In some embodiments, these kinds of container units can be plugged into the locations of the sample reservoir **124** and the buffer reservoir **122,** where the sample reservoir **124** and the buffer reservoir **122** can be designed to have a receiving structure to couple with the container units and allow the biomedical sample **40** and the buffer liquid **42** in the container units to move into the channels **126** of the diagnostic cartridge **10.** For instance, several micro needles can be disposed in the reservoirs for piercing the container units. By using the container units and this pre-collection manner, some users may provide the biomedical sample in a more convenient way since the cost of the container units (e.g., the manufacture or delivery) may be substantially lower than that of the diagnostic cartridge, or the container units can be integrated with the sampling device.

In some embodiments, the cover body **110** is disposed over the case body **102** and covers the fluid-guide body **108.** In some embodiments, the material of the cover body **110** is identical to that of the case body **102.** The functional components such as the biosensor device **104,** the elastic membrane **106,** the fluid-guide body **108** can be well-protected by the combination of the case body **102** and the cover body **110.** In some embodiments, the shield structure of the diagnostic cartridge **10** is at least separated into the body **102** and the cover body **110** because of the manufacturing process requirement, while the mechanism that how to combine these two parts do not affect the diagnosis function of the diagnostic cartridge **10.**

In some embodiments, the diagnostic cartridge **10** further includes a sealing membrane **128** disposed over the fluid-guide body **108.** The sealing membrane **128** can be an adhesive tape configured to be adhesive in proximity to a side of the fluid-guide body **108.** In some embodiments, the sealing membrane **128** is a pressure sensitive tape. In some embodiments, the material of the sealing membrane **128** includes PDMS. That is, the stack of the elastic membrane **106,** the fluid-guide body **108,** and the sealing membrane **128** can be a three-layer-PDMS-sheet design that even though the material is substantially identical, being manufactured separately is much easier to form the microstructures thereof. For instance, the channels and reservoirs in the diagnostic cartridge **10** can be formed by engraving the surfaces of the PDMS sheet before attaching them to each other. The sealing membrane **128** is configured to seal the buffer reservoir **122** and the sample reservoir **124,** so that the leakage of the buffer liquid from the buffer reservoir **122** before using the diagnostic cartridge **10** can be avoided. Meanwhile, the sealing membrane **128** can be used to avoid contamination of the sample reservoir **124,** such as some unwanted environmental substances. In some embodiments, the sealing membrane **128** can be punctured to inject the biomedical sample into the sample reservoir **124.**

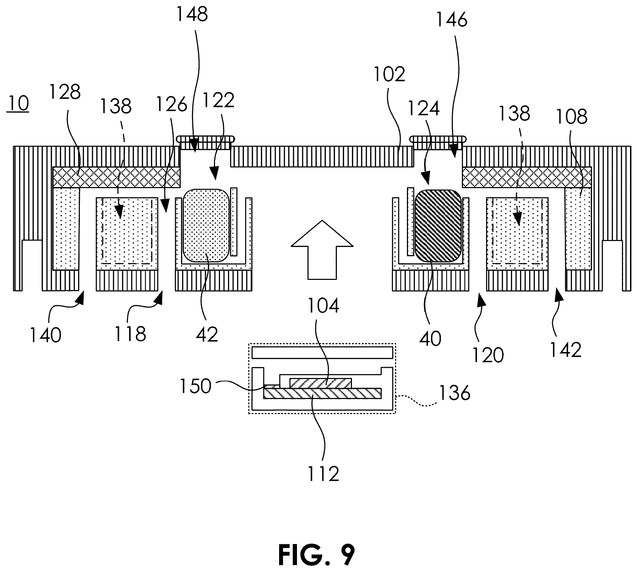

Referring to FIG. **9****,** in some embodiments, the biosensor device **104** is packaged in an embedding module **136,** and the embedding module **136** is detachable from the case body **102.** In some embodiments, within the embedding module **136,** the biosensor device **104** and the PCB **112** (or other kinds of substrates) mounted there below are both packaged in a case material of the embedding module **136,** while a sensing structure **150** over the PCB **112** is exposed to interact with the buffer liquid **42** and the biomedical sample **40.** The sensing structure **150** is electrically connected with the biosensor device **104** through the PCB **112.**

In order to read the electrical signal from the diagnostic cartridge **10** speedy in a convenient manner, in some embodiments of the present invention, the semiconductor biosensor diagnostic system includes a diagnostic cartridge base **30** configured to diagnose the sample in the diagnostic cartridge **10.** Particularly, the design rule of the diagnostic cartridge base **30** is corresponding to the structure of diagnostic cartridge **10.**

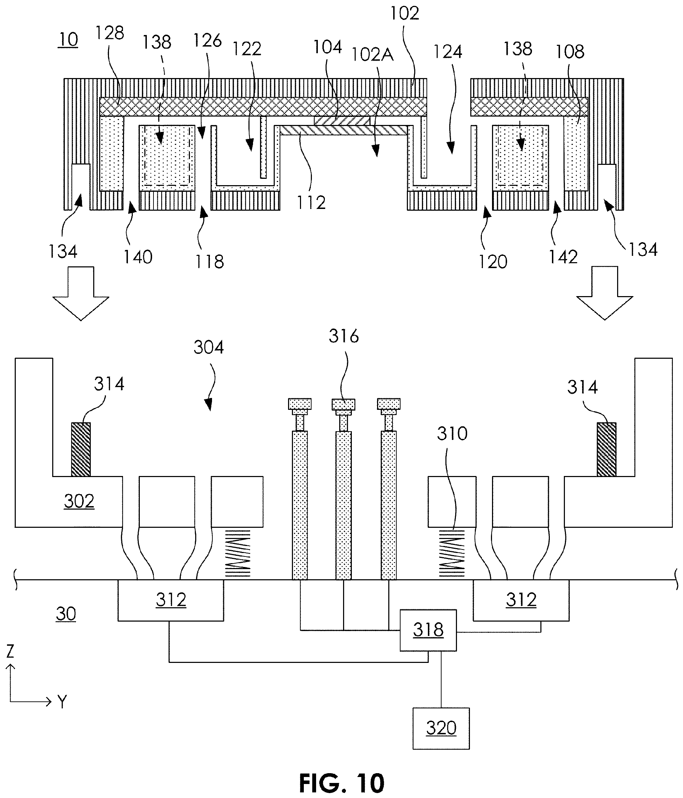

Referring to FIG. **10****,** in some embodiments, the semiconductor biosensor diagnostic system includes the diagnostic cartridge **10** substantially identical to the embodiment previously shown in FIG. **1****,** for example, and once the diagnostic cartridge **10** has been applied the biomedical sample thereto, it can be placed on the diagnostic cartridge base **30** to read the electrical signal provided by the biosensor device **104.** In some embodiments, the diagnostic cartridge base **30** includes a cartridge carrier **302** which has a socket space **304** for placing the diagnostic cartridge **10.**

In some embodiments, the diagnostic cartridge base **30** further includes a probe structure **316** facing toward the upper side of the diagnostic cartridge base **30** to in contact with the diagnostic cartridge **10.** In some embodiments, the diagnostic cartridge base **30** further includes a plurality of openings at the socket space **304** configured to provide a coupling between the plurality of pumping openings of the diagnostic cartridge and the plurality of micro pumps **312** (e.g., the micro pumps **312A** and **312B** in previously shown embodiments). In some embodiments, each of the plurality of openings at the socket space **304** includes silicon rubber for the landing of the diagnostic cartridge **10,** and may provide a substantial sealed gas connection pathway along the coupling of the openings at the socket space **304** and the pumping openings at the diagnostic cartridge **10.** Furthermore, the diagnostic cartridge base **30** may include a spring mechanism **310** under the cartridge carrier **302,** which is configured to apply a spring load toward a bottom of the diagnostic cartridge base **30** when placing the diagnostic cartridge **10** in the cartridge carrier **302.**

That is, while placing the diagnostic cartridge **10** in the socket space **304** of the cartridge carrier **302,** the diagnostic cartridge **10** would be pushed toward the cartridge carrier **302** and the bottom side of the diagnostic cartridge **10** would first in contact with the inner surface of the socket space **304** and make the openings at the socket space **304** coupling with the pumping openings at the diagnostic cartridge **10.** In some embodiments, as shown in FIG. **10****,** the case body **102** includes four pumping openings connecting with the reservoirs in the diagnostic cartridge **10.**

In some embodiments, the diagnostic cartridge base **30** includes the plurality of micro pumps **312.** In some embodiments, the plurality of openings at the socket space **304** are connected to the micro pumps **312,** respectively, so that the fluid and pass through the connection of the openings and the pumping openings for pushing the buffer liquid **42** and the biomedical sample **40** in the diagnostic cartridge **10.** In some embodiments, the diagnostic cartridge base **30** includes a microcomputer configured to control the micro pumps **312.** In some embodiments, the micro pump **312** can be a motor installed in the diagnostic cartridge base **30.**

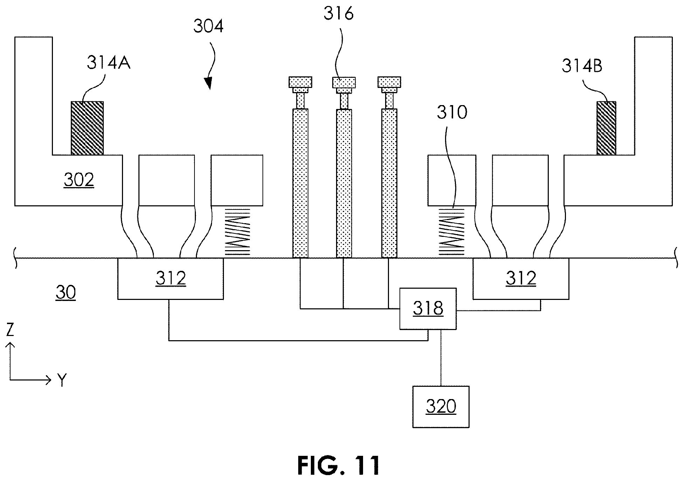

Still referring to FIG. **10****,** in some embodiments, the diagnostic cartridge base **30** further includes at least two alignment pillars **314,** and the diagnostic cartridge **10** includes at least two alignment trenches **134** corresponding to the alignment pillars **314,** respectively. The combination of the alignment pillars **314** and the alignment trenches **134** can be used to ensure the position of the diagnostic cartridge **10** landed in the socket space **304** is correct. In some embodiments, each alignment pillar **314** has an identical profile. In some embodiments, the distribution of the alignment pillars **314** in the socket space **304** is arranged to ensure the diagnostic cartridge **10** can be placed in a correct, fixed direction. For example, the alignment pillars **314** can be located asymmetrically to the center of the socket space **304** from a cross-sectional view perspective. In some embodiments, the profiles of the alignment pillars **314** can be different from each other, which is another approach to ensure the direction of the diagnostic cartridge **10** to be placed (see the alignment pillars **314A** and **314B** in FIG. **11** as an example).

As previously mentioned, the diagnostic cartridge base **30** includes a probe structure **316** facing toward the upper side of the diagnostic cartridge base **30.** In some embodiments, the probe structure **316** includes a plurality of probing pins configured to electrically contact the plurality of metal pads at the lower surface of the PCB **112.** In some embodiments, the probing pins are pogo pins. In the scenario that other kinds of substrate is applied, the form and the design of the probe structure **316** would be corresponding to such kinds of substrate accordingly, in order to read the electrical/optical signals properly. In some embodiments, by using the probe structure **316,** the electrical signal generated by the biosensor device **104** can be digitally transmitted to a microcomputer connected with the probe structure **316** for further analysis or be displayed by screens.

In order to provide the digital communication as abovementioned, in some embodiments, the probe structure **316** can penetrate the inner surface **102A** of the case body **102** of the diagnostic cartridge **10** to electrically connect to the biosensor device **104.** In some embodiments, since the biosensor device **104** is disposed on the PCB **112,** the metal pads **114** at the lower surface **112A** of the PCB **112** can be exposed from the inner surface **102A** of the case body **102** and in contact with the probe structure **316** when the diagnostic cartridge **10** is placed in the diagnostic cartridge base **30.**

In some embodiments, as shown in FIG. **10****,** the diagnostic cartridge base **30** can be a fully functional compact device that not only includes the components to receive the electrical signal from the diagnostic cartridge **10,** but also includes a computing unit **318** and a display unit **320** to illustrate the information regarding the diagnosis result in real-time. In some embodiments, the display unit **320** is a touch screen, and so after the diagnostic cartridge **10** is correctly plugged, installed, or delivered into the diagnostic cartridge base **30,** users can control the process of diagnosis through the display unit **320.** In other embodiments, the display unit **320** can be omitted and the information can be shown in a remote device that is wired or wirelessly connected to the diagnostic cartridge base **30.**

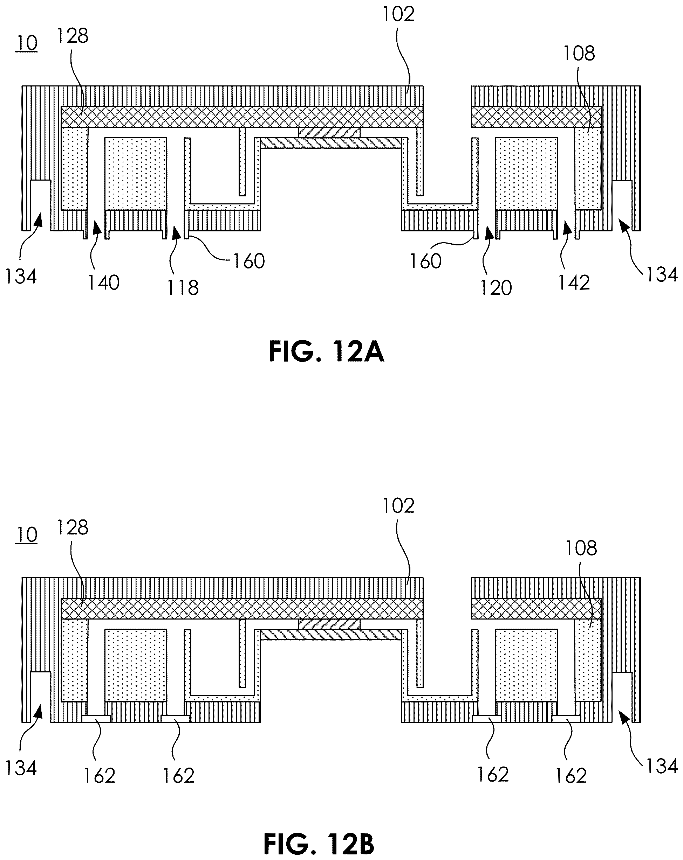

Referring to FIGs. **12A** and **12B****,** in some embodiments, the pumping openings of the diagnostic cartridge **10** may have a structural design for coupling with the micro pumps **312** of the diagnostic cartridge base **30.** For instance, in a pin-type design shown in FIG. **12A****,** each pumping opening of the diagnostic cartridge **10** may include a protrusion structure **160,** which acts as a pin structure during coupling with the openings on the diagnostic cartridge base **30,** such as being plugged into the silicon rubber at each of the openings within the socket space **304** of the diagnostic cartridge base **30** for securing the diagnostic cartridge **10.** In some embodiments, the height of the protrusion structure **160** is no greater than about 5 mm. In other embodiments, as in the hole-type design shown in FIG. **12B****,** each pumping opening of the diagnostic cartridge **10** may be temporarily sealed by a sealing membrane **162,** and the diagnostic cartridge base **30** may have needles capable of puncturing the sealing membrane **162** and being correctly inserted into the pumping openings.

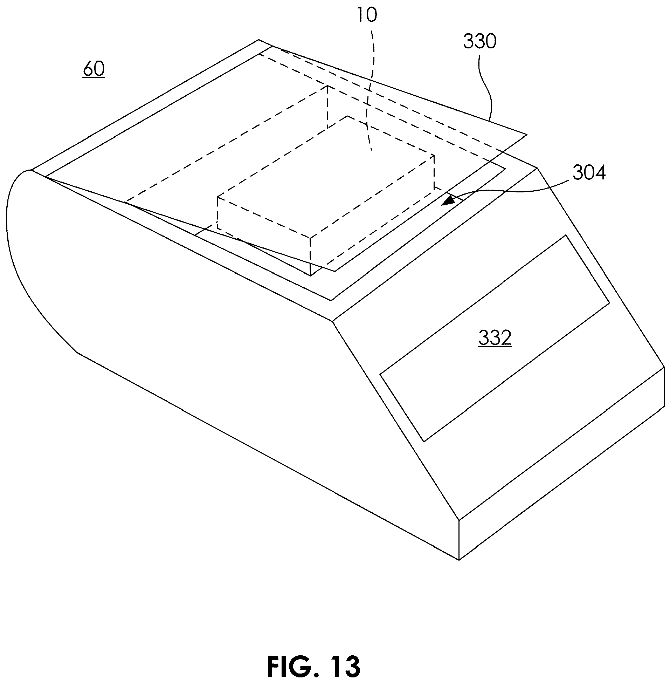

FIG. **13** illustrates an example of the semiconductor biosensor diagnostic system **60.** As shown in the figure, the specific form of the diagnostic cartridge base **30** in the semiconductor biosensor diagnostic system **60** can be a desktop-type device, with the socket space **304** to accommodate the diagnostic cartridge **10.** In some embodiments, the diagnostic cartridge base **30** has a cover **330** to enclose the socket space **304,** which can serve as a mechanism to assist in pressing the diagnostic cartridge **10** into position. In some embodiments, the diagnostic cartridge base **30** includes a display screen **332** for users to observe diagnostic results or provide a mechanism for touch operation, such as running appropriate software to provide a user-friendly interface accordingly. In some embodiments, the cover **330** of the diagnostic cartridge base **30** may include a transparent window for user observation. In other embodiments, the cover **330** of the diagnostic cartridge base **30** may feature a central opening for operating the diagnostic cartridge **10,** rather than fully covering the diagnostic cartridge **10** within the diagnostic cartridge base **30.**

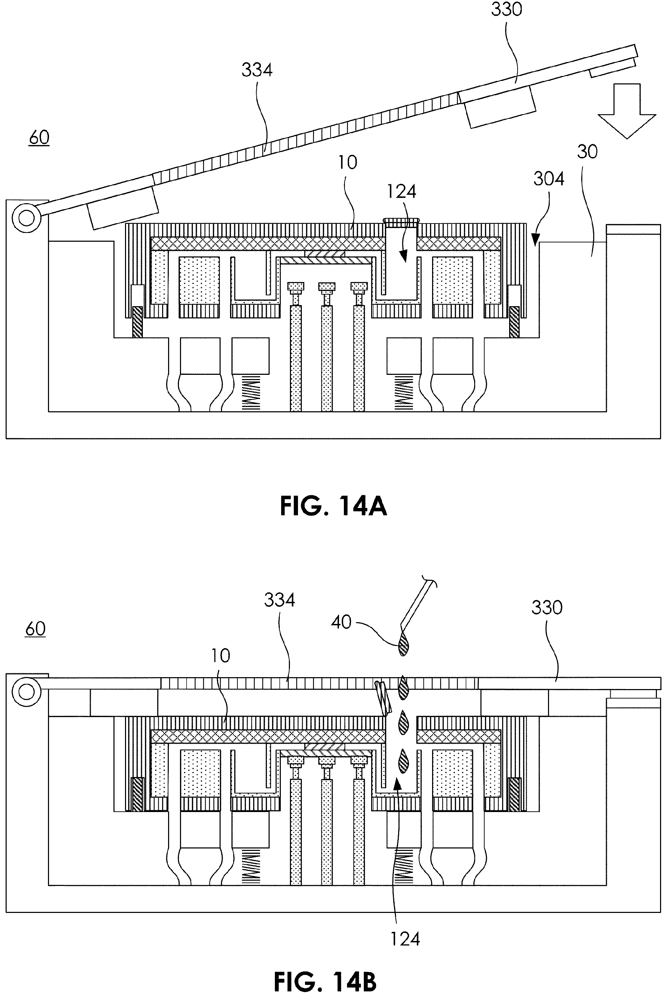

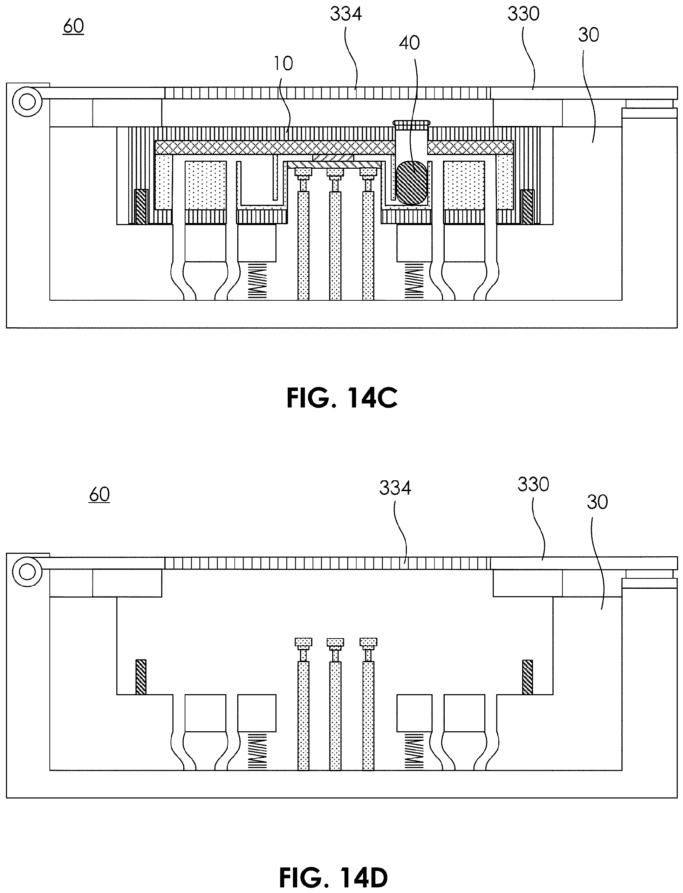

Referring to FIGs. **14A-14D****,** which illustrates cross-sectional views of an operating process of the semiconductor biosensor diagnostic system **60** according to some embodiments of the present invention. As illustrated in FIG. **14A****,** the diagnostic cartridge **10** can be inserted into the socket space **304** of the diagnostic cartridge base **30.** Subsequently, pushing down the cover **330** of the diagnostic cartridge base **30** will ensure that the diagnostic cartridge **10** is securely positioned within the socket space **304.** Moving on to FIG. **14B****,** in cases where the cover **330** includes a central opening **334,** users may introduce the biomedical sample **40** into the diagnostic cartridge **10** through the central opening **334** (e.g., by vertically dropping the sample into the sample reservoir **124).** Once the biomedical sample **40** is placed into the sample reservoir **124** of the diagnostic cartridge **10** and the cover **330** of the diagnostic cartridge base **30** is securely closed, as illustrated in FIG. **14C****,** the testing process of the biomedical sample **40** can commence. Upon completion of the test, as shown in FIG. **14D****,** the diagnostic cartridge **10** can be removed from the diagnostic cartridge base **30** for proper disposal or partial recycling.

Overall, the semiconductor biosensor diagnostic system in the present invention is a user-friendly system. The biosensor device in the diagnostic cartridge of the system may generate electrical signals for precision diagnosis. Users can inject the sample into the sample reservoir and subsequently place the diagnostic cartridge on the diagnostic cartridge base to accomplish the diagnosis operations. To be more detailed, the system in the present invention applies the pumping mechanism to the fluid-guide structure in the diagnostic cartridge to transport a buffer liquid cleaning the biosensor device, and the liquid biomedical sample can be measured by the biosensor device subsequently. Since the PCB that the biosensor device is mounted on a PCB having a plurality of probing pads, the diagnostic cartridge base of the system can read the electrical signal from the diagnostic cartridge quickly. Furthermore, the diagnostic cartridge and the diagnostic cartridge base can be combined simply by pushing the diagnostic cartridge towards the diagnostic cartridge base. Accordingly, the microcomputer can be used to control the pumping mechanism to perform the diagnosis and transfer the electrical bio-signal to a display screen, internet, or other reporting systems.

In one exemplary aspect, a semiconductor biosensor diagnostic system is provided. The semiconductor biosensor diagnostic system includes a diagnostic cartridge and a diagnostic cartridge base. The diagnostic cartridge includes a biosensor device, a fluid-guide body over the biosensor device configured to guide a sample and a buffer liquid to the biosensor device. The fluid-guide body includes a first pumping opening, a second pumping opening, a buffer reservoir, a sample reservoir, and a plurality of channels. The first pumping opening and the second pumping opening are in proximity to a side of the fluid-guide body. The buffer reservoir located in a region between the first pumping opening and the biosensor device. The sample reservoir is located in a region between the second pumping opening and the biosensor device. The plurality of channels is configured to provide a first loop comprising the first pumping opening and the buffer reservoir, and a second loop comprising the second pumping opening and the sample reservoir, wherein the first loop and the second loop sharing a common channel passing through the biosensor device. The diagnostic cartridge base includes a plurality of micro pumps coupled to the first pumping opening and the second pumping opening, and a sensing structure configured to receive a sensing information from the biosensor device.

In another exemplary aspect, a diagnostic cartridge is provided. The diagnostic cartridge includes a case body, a biosensor device, and a fluid-guide body. The case body has a recess. The biosensor device is embedded in the recess of the case body. The fluid-guide body is in the case body. The fluid-guide body includes a sample reservoir and a buffer reservoir laterally between the first pumping opening and the second pumping opening from a side view perspective; and a plurality of channels. One of the plurality of channels connects the sample reservoir and the buffer reservoir and crossing over the biosensor device, and the sample reservoir and the buffer reservoir further connecting with a pumping opening through the plurality of channels, respectively.

In yet another exemplary aspect, a diagnostic cartridge base is provided. The diagnostic cartridge base is configured to read an electrical signal from a diagnostic cartridge. The diagnostic cartridge base includes a cartridge carrier configured to place the diagnostic cartridge; a sensing structure configured to couple to a biosensor device of the diagnostic cartridge; a spring mechanism under the cartridge carrier, configured to apply a spring load toward a bottom of the diagnostic cartridge base when placing the diagnostic cartridge in the cartridge carrier; and a plurality of micro pumps configured to couple to a plurality of pumping openings of the diagnostic cartridge when placing the diagnostic cartridge in the cartridge carrier.

## Claims

1. A diagnostic cartridge (10), **characterized by** comprising:
a case body (102) having a recess;
a biosensor device (104) embedded in the recess of the case body (102); and
a fluid-guide body (108) in the case body (102), the fluid-guide body (108) comprises:
a first pumping opening (118) in proximity to a side of the fluid-guide body (108);
a second pumping opening (120) in proximity to the side of the fluid-guide body (108);
a sample reservoir (124) and a buffer reservoir (112) laterally between the first pumping opening (118) and the second pumping opening (120) from a side view perspective; and
a plurality of channels (126), wherein one of the plurality of channels (126) connects the sample reservoir (124) and the buffer reservoir (112) and crossing over the biosensor device (104), and the sample reservoir (124) and the buffer reservoir (112) further connecting with the first pumping opening or the second pumping opening (118, 120) through the plurality of channels (126), respectively.

2. The diagnostic cartridge of claim 1, wherein the case body (102) comprises a first opening (146) with a first cover set over the sample reservoir (124).

3. The diagnostic cartridge of claim 1 or 2, wherein the case body (102) comprises a second opening (148) with a second cover set over the buffer reservoir (112) configured to inject a buffer liquid (42).

4. The diagnostic cartridge of one of claims 1-3, wherein the fluid-guide body (108) further comprises two waste reservoirs (138) adjacent to the sample reservoir (124) and the buffer reservoir (112), respectively.

5. The diagnostic cartridge of claim 4, further comprising a sealing membrane (128) over the fluid-guide body (108), configured to seal the plurality of channels (126), the buffer reservoir (112), the sample reservoir (124), and the two waste reservoirs (138).

6. The diagnostic cartridge of one of claims 1-5, wherein the buffer reservoir (112) is located in a region between the first pumping opening (118) and the biosensor device (104).

7. The diagnostic cartridge of one of claims 1-6, wherein the biosensor device (104) is packaged in an embedding module (136), and wherein the embedding module (136) is detachable from the case body (102).

8. A diagnostic cartridge base (30), configured to read an electrical signal from a diagnostic cartridge (10), **characterized in that** the diagnostic cartridge base (30) comprises:
a cartridge carrier (302) configured to place the diagnostic cartridge (10);
a sensing structure (150) configured to couple to a biosensor device (104) of the diagnostic cartridge (10);
a spring mechanism (310) under the cartridge carrier (302), configured to apply a spring load toward a bottom of the diagnostic cartridge base (30) when placing the diagnostic cartridge (10) in the cartridge carrier (302); and
a plurality of micro pumps (312A, 312B) configured to couple to a plurality of pumping openings (118, 120) of the diagnostic cartridge (10) when placing the diagnostic cartridge (10) in the cartridge carrier (302).
